# EUROPÄISCHE PATENTSCHRIFT

(11) **EP 2 983 236 B1**
(45) Veröffentlichungstag und Bekanntmachung des Hinweises auf die Patenterteilung: **18.10.2017**
(21) Anmeldenummer: 14180439.3
(22) Anmeldetag: 08.08.2014
(51) Int. Cl.: H01M 2/02, H01M 4/24, H01M 10/30, H01M 10/42, H01M 10/44, H01M 4/32, H01M 4/52, H01M 4/583, H01M 4/80, H01M 12/00

(54) **Sekundäres elektrochemisches Element auf Basis von Nickel / Eisen**
Secondary electrochemical element based on nickel/iron
Élément électrochimique secondaire à base de nickel / fer

(43) Veröffentlichungstag der Anmeldung: 10.02.2016
(73) Patentinhaber: VARTA Microbattery GmbH, 73479 Ellwangen (DE)
(72) Erfinder: Pytlik, Edward, 73479 Ellwangen (DE); Ensling, David, 73479 Ellwangen (DE); Chumak, Ihor, 73479 Ellwangen (DE); Senz, Stefan, 73485 Unterschneidheim (DE)
(74) Vertreter: Patentanwaltskanzlei Cartagena

(56) Entgegenhaltungen:
- WO-A2-03/088374
- US-A- 3 898 098
- US-A- 5 666 040
- US-A1- 2013 189 580
- HAILIANG WANG ET AL.: "An ultrafast nickel-iron battery from strongly coupled inorganic nanoparticle/nanocarbon hybrid materials", NATURE COMMUNICATIONS, 26. Dezember 2012 (2012-12-26), XP002729665, DOI: 10.1038/ncomms1921
- WEI JIANG ET AL.: "Enhanced electrochemical performances of FeOx-graphene nanocomposites as anode materials for alkaline nickel iron batteries", RSC ADV., Bd. 45, 7. März 2014 (2014-03-07), Seiten 15394-15399, XP002729662,
- CONGLAI LONG ET AL.: "Supercapacitors based on graphene-supported iron nanosheets as negative electrode materials", ACS NANO, Bd. 7, Nr. 12, 12. November 2013 (2013-11-12), Seiten 11325-11332, XP002729663,
- SHUBIN YANG ET AL.: "Spherical alpha-Ni(OH)2 nanoarchitecture grown on graphene as advanced electrochemical preudocapacitor materials", CHEM.COMMUN., Bd. 48, 18. Januar 2012 (2012-01-18), Seiten 2773-2775, XP002729664,

## Beschreibung

Die vorliegende Erfindung betrifft einen Zellverbund aus zwei oder mehr sekundären elektrochemischen Zellen auf Basis von Nickel / Eisen sowie ein Verfahren zum Laden eines solchen elektrochemischen Elements.

Elektrochemische Zellen auf Basis von Nickel / Eisen sind in Form des Nickel-Eisen-Akkumulators (Edison-Akkumulator) bereits seit langem bekannt. Die Elektrodenreaktionen beim Laden und Entladen einer elektrochemischen Zelle auf Basis von Nickel / Eisen lassen sich durch folgende Gleichungen beschreiben:
Laden

   2Ni(OH)₂ + 2OH⁻ → 2NiO(OH) + 2H₂O + 2e⁻Fe(OH)₂ + 2e⁻ → Fe + 2OH⁻ [Gleichung 1]
Entladen

   2NiO(OH)+2H₂O+2e⁻→2Ni(OH)₂+2OH⁻Fe+2OH⁻→Fe(OH)₂+2e⁻ [Gleichung 2]
Als Elektrolyt dient in der Regel Kalilauge.

Nickel-Eisen-Akkumulatoren sind sehr zuverlässig und langlebig. Allerdings lassen sich ihnen keine hohen Ströme entnehmen. Als Quellen für hohe Pulsströme, wie sie beispielsweise von Doppelschichtkondensatoren geliefert werden können, eignen sie sich in der Regel nicht.

Aus der Veröffentlichung von Hailiang Wang et al. "Nickel-iron battery from strongly coupled inorganic nanoparticle/nanocarbon hybrid materials", NATURE COMMUNICATIONS, 26. Dezember 2012, ist ein Kathodenmaterial für einen Nickel-Eisen-Akkumulator bekannt, bei dem Nickelhydroxid-Nanokristalle auf oxidierten Kohlenstoff-Nanotubes abgeschieden sind. Anodenseitig kommt ein Hybridmaterial aus Eisenoxid und Graphen zum Einsatz, das durch eine Gasphasenabscheidung hergestellt wurde.

In der US 2013/189580 A1 sind die Herstellung eines Eisenoxid/Graphen-Hybridmaterials sowie die Abscheidung von Nickelhydroxid auf oxidierten Kohlenstoffnanotubes beschrieben. Auch diese Materielien eignen sich grundsätzlich zum Einsatz in Nickel-Eisen-Akkumulatoren.

Aus der Veröffentlichung von Wei Jiang et al. "Electrochemical performances of FeOx-graphene nanocomposites as anode materials for alkaline nickel iron batteries", RSC ADV., Bd. 45, 7. März 2014, Seiten 15394-15399, betrifft graphenbasierte Eisenoxid-Nanokomposite. Zur Herstellung derselben werden Eisenionen nasschemisch auf Graphenoxid abgeschieden und anschließend bei Temperaturen von bis zu 700°C wärmebehandelt.

Aus der Veröffentlichung von Conglai Long et al.: "Hybrid materials based on graphene-supported iron nanosheets as negative electrode materials", ACS NANO, Bd. 7, Nr. 12, 12. November 2013, Seiten 11325-11332, betrifft ein Hybridmaterial aus Eisen und Graphenoxid. Zur Herstellung desselben werden auch hier Eisenionen aus einer Eisennitrat-Lösung auf Graphenoxid abgeschieden, wiederum gefolgt von einer Wärmebehandlung, hier bei 850°C.

Aus der Veröffentlichung von Shubin Yang et al.: "Spherical alpha-Ni(OH)2 nanoarchitecture grown on graphene as advanced electrochemical pseudocapacitor materials", CHEM.COM-MUN., Bd. 48, 18. Januar 2012, Seiten 2773-2775, betrifft ein positives Elektrodenmaterial aus Nickelhydroxid und Graphenoxid. Negative Elektrodenmaterialien sind in der Veröffentlichung nicht beschrieben.

Aus der WO 03/088374 A2 sind Energiespeicher mit einer auf Nickelhydroxid basierenden positiven Elektrode und einer kohlenstoffbasierten negativen Elektrode bekannt, wobei die negative Elektrode zusätzlich zu Kohlenstoff ein sogenanntes "redox couple" aufweisen kann. Das redox couple kann als Aktivmaterial unter anderem auch Eisenoxid oder Eisenhydroxid umfassen.

Aus der US 3898098 A ist ein Verfahren zur Herstellung von negativen Elektroden für Nickel-Eisen-Akkumulatoren bekannt. Hierbei wird ein Aktivmaterial elektrochemisch aus einer wässrigen Eisensalzlösung abgeschieden.

Der vorliegenden Erfindung lag die Aufgabe zugrunde, einen Zellverbund mit verbesserten Nickel-Eisen-Akkumulatoren bereitzustellen, die die angegebenen Nachteile des Standes der Technik nicht aufweisen.

Diese Aufgabe wird gelöst durch den Zellverbund mit den Merkmalen des Anspruchs 1. Der erfindungsgemäße Zellverbund besteht aus zwei oder mehr sekundären elektrochemischen Zellen, die in dem Zellverbund parallel zueinander oder in Reihe geschaltet sind. Die Zellen weisen ein gasdicht ausgebildetes Gehäuse auf. Jede der Zellen umfasst eine negative Elektrode, eine positive Elektrode, einen porösen Separator, der die negative und die positive Elektrode voneinander trennt sowie einen wässrigen alkalischen Elektrolyten, mit dem die Elektroden und der Separator getränkt sind. Bei den Zellen handelt es sich um ein sekundäre elektrochemische Zellen. Mit anderen Worten, Lade- und Entladevorgänge sind reversibel.

Die negative Elektrode enthält einen Stromableiter sowie ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht.

Zusätzlich enthält die Elektrode Eisen in metallischer (Oxidationsstufe 0) und/oder oxidierter Form (Oxidationsstufe 2 oder 3). Wenn das Eisen oxidiert vorliegt, so liegt es insbesondere als Eisenhydroxid in der Elektrode vor. Wie den eingangs dargestellten Gleichungen zu entnehmen ist, verschiebt sich beim Laden und Entladen das Gleichgewicht zwischen der oxidierten und der metallischen Form.

Die positive Elektrode enthält ebenfalls einen Stromableiter. Darüber hinaus enthält sie Nickelhydroxid (Ni(OH)₂) und/oder Nickeloxyhydroxid (NiO(OH)).

Besonders zeichnen sich die Zellen dadurch aus, dass die negative Elektrode das kohlenstoffbasierte Speichermaterial in einem Anteil von mindestens 5 Gew.-% enthält.

Bevorzugt enthält die negative Elektrode das kohlenstoffbasierte Speichermaterial in einem Anteil von mehr als 5 Gew.-%. Besonders bevorzugt liegt dieser zwischen 5 Gew.-% und 100 Gew.-%, bevorzugt zwischen 5 Gew.-% und 90 Gew.-%, weiter bevorzugt zwischen 5 Gew.-% und 75 Gew.-%, insbesondere zwischen 5 Gew.-% und 50 Gew.-%. Innerhalb des letztgenannten Bereiches sind Gewichtsanteile zwischen 5 Gew.-% und 25 Gew.-%, insbesondere zwischen 5 Gew.-% und 15 Gew.-%, weiter bevorzugt.

An Stelle der im vorangehenden Absatz genannten Bereichsuntergrenzen kann die Untergrenze für den Anteil an kohlenstoffbasiertem Speichermaterial in den genannten Bereichen auch 5,5 Gew.-%, bevorzugt 6 Gew.-%, insbesondere 6,5 Gew.-%, betragen.

Alle genannten Prozentangaben beziehen sich auf das Gesamtgewicht der negativen Elektrode in trockenem Zustand (also ohne Elektrolyt), abzüglich des Gewichts des Stromableiters, das nicht berücksichtigt wird.

Beim Laden der positiven Elektrode wandelt sich, wie Gleichung 1 zu entnehmen ist, Nickelhydroxid unter Aufnahme eines Hydroxid-Ions und unter Abgabe eines Wassermoleküls und Elektronen in Nickeloxyhydroxid um. Umgekehrt nimmt Nickeloxyhydroxid beim Entladen ein Elektron auf und wandelt sich mit Wasser unter Abgabe eines Hydroxid-Ions in Nickelhydroxid um. Theoretisch ist es somit möglich, dass eine positive Elektrode in vollständig geladenem Zustand ausschließlich Nickeloxyhydroxid aufweist und in vollständig entladenem Zustand ausschließlich Nickelhydroxid. In der Praxis liegen die beiden Verbindungen in Elektroden aber meist nebeneinander vor, wobei das Mengenverhältnis der Verbindungen zueinander vom Ladezustand der Elektroden abhängt.

Gemäß der vorliegenden Erfindung ist es bevorzugt, dass der Anteil an dem Eisen in metallischer und/oxidierter Form in der negativen Elektrode zwischen 25 Gew.-% und 95 Gew.-%, bevorzugt zwischen 50 Gew.-% und 95 Gew.-%, besonders bevorzugt zwischen 75 Gew.-% und 95 Gew.-%, insbesondere zwischen 85 Gew.-% und 95 Gew.-%, beträgt.

Alle genannten Prozentangaben beziehen sich auch hier auf das Gesamtgewicht der negativen Elektrode in trockenem Zustand (also ohne Elektrolyt), abzüglich des Gewichts des Stromableiters.

Aufgrund des Anteils an dem kohlenstoffbasierten Speichermaterial in der negativen Elektrode kann diese elektrische Ladung nicht nur chemisch auf dem Umweg über eine reversible Redoxreaktion gespeichert werden. Vielmehr kann elektrische Ladung auch durch Ausbildung einer Doppelschicht gespeichert werden. Kurzum: Die negative Elektrode der Zellen kann pseudokapazitive Eigenschaften aufweisen.

Die Zellen sind wie ein Kondensator dazu in der Lage, sehr schnell hohe Pulsströme liefern zu können, weisen dabei aber eine höhere Kapazität auf als ein Kondensator. Gegenüber klassischen Nickel-Eisen Akkumulatoren weisen die Zellen eine höhere Überladestabilität bei hohen Temperaturen auf. Letztere dürfte insbesondere auf das kohlenstoffbasierte Speichermaterial in der negativen Elektrode zurückzuführen sein, das zu einem Verzehr in Folge einer Überladung entstandenen Sauerstoffs beitragen kann. Diese Eigenschaft ermöglicht es im Übrigen auch, das Gehäuse der Zellen gasdicht auszubilden.

Als zur Ausbildung einer elektrischen Doppelschicht befähigtes kohlenstoffbasiertes Speichermaterial werden vorliegend Aktivkohle oder Graphen eingesetzt. Bei Aktivkohle handelt es sich bekanntlich um einen porösen, feinkörnigen Kohlenstoff mit einer sehr großen inneren Oberfläche. Besonders bevorzugt ist im Rahmen der vorliegenden Erfindung Aktivkohle, die eine BET-Oberfläche von mindestens 900 m²/g (bestimmt gemäß DIN ISO 9277) und einem Kapazitätswert von mindestens 60 F/g aufweist (bestimmt gemäß DIN IEC 62391).

Bei Graphen handelt es sich um eine Kohlenstoffmodifikation mit zweidimensionaler Struktur. Eine Vielzahl von verketteten Benzol-Ringen bildet ein bienenwabenförmiges Muster aus, in dem jedes Kohlenstoffatom im Winkel von 120° von drei weiteren Kohlenstoffatomen umgeben ist und wobei alle Kohlenstoffatome sp²-hybridisiert sind. Graphen bietet die theoretisch größte mit Kohlenstoff erreichbare Oberfläche pro Gewichtseinheit und ist daher aktuell Gegenstand intensiver Untersuchungen im Zusammenhang mit der Entwicklung von Superkondensatoren. Sowohl Graphen als auch Aktivkohle sind darüber hinaus in der Lage, Wasserstoff zu speichern. Unter anderem diese Eigenschaft macht sie als Elektrodenaktivmaterial für die negative Elektrode der Zellen so interessant.

Selbstverständlich können Graphen und Aktivkohle auch in Kombination miteinander verwendet werden. Hierbei ist jedes Mischungsverhältnis denkbar.

Das verwendete kohlenstoffbasierte Speichermaterial liegt bevorzugt in partikulärer Form vor, Bei der Herstellung der Zellen kommt es insbesondere in Form eines Pulvers mit einer mittleren Partikelgröße zwischen 50 nm und 500 µm, insbesondere mit einer mittleren Partikelgröße zwischen 10 µm und 50 µm, zum Einsatz.

Das verwendete Eisen liegt ebenfalls bevorzugt in partikulärer Form vor. Bei der Herstellung der Zellen kommt es insbesondere in Form eines Pulvers mit einer mittleren Partikelgröße zwischen 10 nm und 100 µm, insbesondere mit einer mittleren Partikelgröße zwischen 10 nm und 1 µm, zum Einsatz.

Zur Herstellung der negativen Elektrode der Zellen werden ein pulverförmiges kohlenstoffbasiertes Speichermaterial und pulverförmiges Eisen zu einer Mischung verarbeitet. Dieser werden in der Regel noch weitere Komponenten zugesetzt. Auf diese weiteren Komponenten wird im Folgenden noch detailliert eingegangen. In der Elektrode liegen die Partikel aus dem kohlenstoffbasierten Speichermaterial und dem Eisen in Folge des vorgeschalteten Mischvorgangs in einer homogenen Verteilung vor.

Das Nickelhydroxid und/oder Nickeloxyhydroxid wird bevorzugt in Form von sphärischen Partikeln eingesetzt. Weiterhin kann es bevorzugt sein, dass die eingesetzten Partikel eine Oberfläche aufweisen, die zumindest teilweise mit Kobalt beschichtet ist.

In aller Regel enthält die positive Elektrode das Nickelhydroxid und/oder das Nickeloxyhydroxid in einem Anteil zwischen 10 Gew.-% und 100 Gew.-%, bevorzugt zwischen 25 Gew.-% und 100 Gew.-%, insbesondere zwischen 50 Gew.-% und 100 Gew.-%.

Diese Prozentangaben beziehen sich auf das Gesamtgewicht der positiven Elektrode in trockenem Zustand (also ohne Elektrolyt), abzüglich des Gewichts des enthaltenen Stromableiters.

Neben den genannten Komponenten können die negative und die positive Elektrode gegebenenfalls noch eine oder mehrere zusätzliche Komponenten aufweisen.

Für die negative Elektrode kommen insbesondere die folgenden zusätzlichen Komponenten in den folgenden Anteilen in Frage:
- 0,1 Gew.-% bis 10 Gew.-%, bevorzugt 1 Gew.-% bis 5 Gew.-%, eines Elektrodenbinders
- 0,1 Gew.-% bis 10 Gew.-%, bevorzugt 1 Gew.-% bis 5 Gew.-%, eines Leitmittels

Diese Komponenten können der negativen Elektrode einzeln oder in Kombination zugesetzt sein.

In einer Weiterbildung umfasst die negative Elektrode besonders bevorzugt die folgenden Komponenten in den folgenden Anteilen:
- zwischen 75 Gew.-% und 94,9 Gew.-%, insbesondere zwischen 85 Gew.-% und 94,9 Gew.-%, des Eisens
- zwischen 5 Gew.-% und 19,9 Gew.-%, insbesondere zwischen 5 Gew.-% und 14,9 Gew.-%, des kohlenstoffbasierten Speichermaterials
- zwischen 0,1 Gew.-% und 10 Gew.-%, bevorzugt zwischen 0,1 Gew.-% und 5 Gew.-%, des Elektrodenbinders

Für die positive Elektrode kommen insbesondere die folgenden zusätzlichen Komponenten in den folgenden Anteilen in Frage:
- 0,1 Gew.-% bis 10 Gew.-%, bevorzugt 1 Gew.-% bis 5 Gew.-%, eines Elektrodenbinders
- 0,1 Gew.-% bis 90 Gew.-%, bevorzugt 0,1 Gew.-% bis 50 Gew.-%, besonders bevorzugt 0,1 Gew.-% bis 40 Gew.-%, insbesondere 0,1 Gew.-% bis 20 Gew.-%, eines Leitmittels
- ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht, insbesondere in einem Anteil von 0,1 Gew.-% bis 20 Gew.-%

Diese Komponenten können der positiven Elektrode einzeln oder in Kombination zugesetzt sein.

In einer Weiterbildung umfasst die positive Elektrode besonders bevorzugt die folgenden Komponenten in den folgenden Anteilen:
- zwischen 50 Gew.-% und 99,8 Gew.-% Nickelhydroxid und/oder Nickeloxyhydroxid
- zwischen 0,1 Gew.-% und 40 Gew.-%, bevorzugt zwischen 0,1 Gew.-% und 45 Gew.-%, des Leitmittels
- zwischen 0,1 Gew.-% und 10 Gew.-%, bevorzugt zwischen 0,1 Gew.-% und 5 Gew.-%, des Elektrodenbinders

Selbstverständlich gilt auch für all diese bevorzugten Ausführungsformen, dass sich diese Prozentangaben jeweils auf das Gesamtgewicht der positiven Elektrode und der negativen Elektrode in trockenem Zustand (also ohne Elektrolyt) beziehen, abzüglich des Gewichts des jeweiligen Stromableiters.

Weiterhin gilt, dass sich in allen angegebenen sowie in allen aus obigen Angaben ableitbaren Zusammensetzungen für die positive und die negative Elektrode die Prozentanteile der jeweils enthaltenen Komponenten in aller Regel auf 100 Gew.-% addieren.

Bei dem Leitmittel handelt es sich bevorzugt um ein Metallpulver, insbesondere um Nickel-und/oder Kobaltpulver. Alternativ oder zusätzlich können auch kohlenstoffbasierte Leitmittel wie Ruß, Graphit, Kohlenstoffnanoröhrchen (CNTs), Nanokohlenstoffe oder auch Graphen verwendet werden.

Als Elektrodenbinder wird im Rahmen der vorliegenden Erfindung bevorzugt ein zellulosebasierter Binder, beispielsweise Carboxymethylzellulose oder ein Derivat von Carboxymethylzellulose, verwendet. Besonders geeignet sind auch wasserlösliche Zelluloseether wie bespielsweise Methylhydroxyethylzellulose (MHEC), Methylhydroxypropylzellulose (MHPC) und Hydroxyethylzellulose (HEC). Alternativ kommen aber auch Polyacrylate oder kunststoffbasierte Binder wie zum Beispiel PTFE-Binder (PTFE = Polytetrafluorethylen) oder Binder auf Basis von SBR (Styrene-Butadiene-Rubber) in Frage. Auch Kombinationen der genannten Binder können zum Einsatz kommen.

Die Elektroden der Zellen müssen nicht zwingend einen Elektrodenbinder enthalten. Sie können beispielsweise auch binderfrei als Sinterelektroden oder als Presslinge gefertigt werden.

Für das kohlenstoffbasierte Speichermaterial, das in bevorzugten Ausführungsformen in der positiven Elektrode enthalten sein kann, kommen die gleichen Materialien in Frage wie im Fall der negativen Elektrode. Es kommen also vor allem Aktivkohle mit den oben genannten Eigenschaften und Graphen in Frage.

Neben den genannten Zusätzen können die positive und/oder die negative Elektrode noch weitere Zusätze enthalten. Beispielhaft zu nennen sind in diesem Zusammenhang insbesondere Kobaltoxid, Kobalthydroxid, Eisensulfid, Kaliumsulfid, Zinksulfat, Ammoniumcarbonat oder Kalziumhydroxid.

Es ist bevorzugt, dass der Stromableiter der positiven und/oder der negativen Elektrode eine dreidimensionale Leitmatrix bildet, in die das kohlenstoffbasierte Speichermaterial sowie das Eisen und/oder das Nickelhydroxid und/oder das Nickeloxyhydroxid eingebettet ist.

In bevorzugten Ausführungsformen kommen auf Seite der positiven und/oder der negativen Elektrode als Stromableiter metallische oder metallbeschichtete offenporige Schäume oder Ableiter aus einem metallischen oder metallbeschichteten Vlies zum Einsatz. Derartige Ableiter kommen klassisch vor allem auf der Seite der positiven Elektrode von Nickel-Cadmium- oder Nickel-Metallhydrid-Akkumulatoren in Knopfzellenform zum Einsatz. Beispielhaft wird in diesem Zusammenhang auf die EP 0 658 949 B1 verwiesen. Sowohl die erwähnten Schäume als auch die erwähnten Vliese sind kommerziell erhältlich. Bevorzugt bestehen sie aus Nickel oder Kupfer oder sind mit einem dieser Metalle beschichtet.

In einigen Ausführungsformen kann es bevorzugt sein, dass lediglich auf Seite der negativen Elektrode ein dreidimensionaler Ableiter aus dem erwähnten Schaum oder Vlies verwendet wird, während auf Seite der positiven Elektrode ein flacher, zweidimensionaler Ableiter, beispielsweise eine Metallfolie oder ein Metallnetz, zum Einsatz kommt. In diesem Fall werden die positiven Elektroden meist über ein Sinterverfahren hergestellt.

Natürlich kann es in einigen Ausführungsformen auch bevorzugt sein, auf Seite der negativen Elektrode einen flachen, zweidimensionalen Ableiter einzusetzen.

Üblicherweise weisen das kohlenstoffbasierte Speichermaterial und das Eisen in der negativen Elektrode, insbesondere in der erwähnten dreidimensionalen Leitmatrix aus dem Stromableiter, eine gleichmäßige Verteilung auf. Diese können zur Herstellung der Elektrode miteinander sowie gegebenenfalls mit einem oder mehreren der weiteren genannten Zusätze vermischt und, beispielsweise als Paste, in einem Schritt gemeinsam zu der Elektrode verarbeitet werden.

In einigen Ausführungsformen kann es allerdings auch bevorzugt sein, dass die negative Elektrode einen ersten Teilbereich, insbesondere eine erste Schicht aufweist, in der das kohlenstoffbasierte Speichermaterial angereichert ist und entsprechend einen zweiten Teilbereich, insbesondere eine zweite Schicht, in der das Eisen angereichert ist. Zur Realisierung einer derartigen Anordnung werden das Eisen und das kohlenstoffbasierte Speichermaterial in der Regel nicht in einem Schritt verarbeitet. So ist es beispielsweise möglich, zunächst in einem ersten Schritt das Eisen in die erwähnte dreidimensionale Matrix aus einem Stromableiter einzubringen und anschließend den Stromableiter auf seiner Außenseite mit dem kohlenstoffbasierten Speichermaterial zu beschichten. So kann es beispielsweise bevorzugt sein, in einen bandförmigen Ableiter aus einem Nickelschaum Eisen einzubringen und anschließend auf einer Seite des Bandes eine Schicht aus dem kohlenstoffbasierten Speichermaterial anzuordnen. Bevorzugt kann die negative Elektrode der Zellen also eine Zweischichtstruktur aufweisen. Dabei bilden der Stromableiter und das Eisen gemeinsam die erwähnte zweite Schicht, wohingegen das kohlenstoffbasierte Speichermaterial die erwähnte erste Schicht bildet.

Sowohl der Separator als auch die positive und die negative Elektrode sind bevorzugt in Form von dünnen Schichten ausgebildet. Sie können beispielsweise in Form von Bändern oder flachen Streifen bereitgestellt werden. Im Falle der Elektroden sind Schichten mit einer Dicke zwischen 50 µm und 500 µm bevorzugt. Die Dicke des verwendeten Separators liegt bevorzugt im Bereich zwischen 10 µm und 100 µm.

Bei dem Separator der Zellen handelt es sich bevorzugt um eine poröse Kunststofffolie, insbesondere um eine Folie aus einem Polyolefin, aus PEEK (Polyetheretherketon) oder aus PES (Polyethersulfon). Es können ohne weiteres aber auch Separatoren aus Papier oder aus einem Vlies eingesetzt werden. Im Grunde ist lediglich erforderlich, dass der Separator eine ausreichende Porosität aufweist, um von dem Elektrolyten durchdrungen zu werden und dass er gegenüber diesem stabil ist.

Die Zellen des Verbundes liegen bevorzugt als Verbund mit der Schichtsequenz positive Elektrode / Separator / negative Elektrode vor. Besonders bevorzugt können die Zellen in Form von Bizellen vorliegen, also mit der Schichtsequenz positive Elektrode / Separator / negative Elektrode / Separator / positive Elektrode oder negative Elektrode / Separator / positive Elektrode / Separator / negative Elektrode.

Wenn die negative Elektrode, wie oben ausgeführt, eine erste Schicht aufweist, in der das kohlenstoffbasierte Speichermaterial angereichert ist, so ist es bevorzugt, dass diese Schicht zwischen der negativen Elektrode und einem benachbarten Separator angeordnet ist.

Die Elektroden der Zellen werden bevorzugt kalandriert, bevor sie miteinander sowie mit dem Separator zu den Zellen kombiniert werden.

Der erwähnte Verbund mit der Schichtsequenz positive Elektrode / Separator / negative Elektrode liegt in einigen bevorzugten Ausführungsformen in Form eines spiralförmigen Wickels vor. Zu Herstellung eines solchen spiralförmigen Wickels können beispielsweise eine bandförmige positive Elektrode und eine bandförmige negative Elektrode mit zwei Separatorbändern mittels eines Laminations- oder Klebevorgangs zu einem Verbund der Sequenz Separator / negative Elektrode / Separator / positive Elektrode kombiniert und anschließend aufgewickelt werden.

Natürlich ist es alternativ auch möglich, mehrere Zellen aus positiver und negativer Elektrode sowie aus einem oder mehreren Separatoren übereinander zu stapeln. Ein möglicher Aufbau eines entsprechenden Stapels ist beispielsweise in der EP 1 011 163 B1 dargestellt.

Bei der Balancierung eines erfindungsgemäßen Zellenverbunds kann sich die erwähnte hohe Überladestabilität als besonders vorteilhaft erweisen. Um alle Zellen des Verbundes wieder auf ein identisches Spannungsniveau zu bringen, kann der Zellverbund gezielt überladen werden. Dies ist in aller Regel nicht möglich, ohne zumindest einzelne Zellen des Verbundes irreparabel zu schädigen. Aufgrund des kohlenstoffbasierten Speichermaterials in den negativen Elektroden der Zellen des Zellverbunds, das zum Verzehr von bei der Überladung erzeugtem Sauerstoff beitragen kann, ist vorliegend die Gefahr einer solchen Schädigung jedoch minimiert.

In bevorzugten Ausführungsformen sind zwei oder mehr der Zellenin einer bipolaren Anordnung miteinander kombiniert. Eine bipolare Anordnung elektrochemischer Zellen zeichnet sich dadurch aus, dass einzelne elektrochemische Zellen als Subzellen fungieren und durch leitende Zwischenwände in Reihe verschaltet sind. Jede Subzelle besitzt dabei eine positive und eine negative Elektrode, die durch einen elektrolytgetränkten Separator voneinander getrennt sind. Zwischen benachbarten Subzellen befindet sich eine Verbindungswand. Diese stellt eine elektrische Verbindung zwischen der positiven Elektrode der einen Zelle und der negativen Elektrode der anderen Zelle her. Gleichzeitig separiert sie die Elektrolyträume der Subzellen voneinander.

Der wässrige Elektrolyt der verwendeten Zellen weist bevorzugt zwischen 0,1 M und 10 M mindestens einer gelöst vorliegenden Hydroxidverbindung auf. Besonders bevorzugt enthält der Elektrolyt als Hydroxidverbindung mindestens ein Metallhydroxid, insbesondere Natrium-, Lithium- oder Kaliumhydroxid.

Besonders bevorzugt enthält der Elektrolyt zusätzlich zu der Hydroxidverbindung mindestens eine Sulfatverbindung, insbesondere ein Alkali- oder Erdalkalisulfat. Bevorzugt ist die mindestens eine Sulfatverbindung in einer Konzentration zwischen 0,001 Gew.-% und 0,1 Gew.-% in dem Elektrolyten enthalten.

In bevorzugten Ausführungsformen enthält der Elektrolyt ein sekundäres Leitsalz mit PO₄³⁻, NO₃ oder Cl⁻ Anionen und metallischen Gegenionen.

Dem Elektrolyten können weiterhin auch Additive zugegeben werden wie beispielsweise Verdicker, Korrosionsinhibitoren, Netzmittel und Frostschutzmittel.

Besonders bevorzugt weist die Zellen ein Gehäuse aus Edelstahl oder aus einem vernickelten Stahl oder Edelstahl auf, das die Elektroden, den Separator und den Elektrolyten flüssigkeitsdicht und gasdicht umschließt. Unter einem gasdichten Verschluss soll hierbei verstanden werden, dass in der Zelle gebildetes Gas nicht aus dem Gehäuse entweichen kann, ohne es dabei zu zerstören. Das Gehäuse umfasst also kein Mittel zu einer gezielten Entlüftung wie beispielsweise ein Ventil. Allerdings kann aus Sicherheitsgründen eine Berstmembran vorgesehen sein, die bei Überschreiten eines Druckschwellenwerts irreversibel zerstört wird.

Das Gehäuse kann beispielsweise als Knopfzellengehäuse ausgebildet sein, beispielsweise als Gehäuse, wie es in der bereits erwähnten EP 1 011 163 B1 dargestellt ist. Alternativ können die Zellen aber auch Flachzellen ausgebildet sein, wie sie beispielsweise in der EP 1 391 947 A1 beschrieben ist. In diesem Fall wird ihr Gehäuse aus dünnen Metallfolien gebildet, die über eine Siegelschicht miteinander verbunden sind.

Insbesondere, wenn der oben beschriebene Verbund mit der Schichtsequenz positive Elektrode / Separator / negative Elektrode in Form eines spiralförmigen Wickels vorliegt, kann das Gehäuse auch als zylindrisches Rundzellengehäuse ausgebildet sein.

Beim Laden der beschriebenen Zellen wird bevorzugt während des Ladevorgangs ihre Temperatur und/oder die Umgebungstemperatur gemessen. Beim Überschreiten eines Temperaturschwellenwerts wird dann die Ladespannung abgesenkt, insbesondere um einen Wert zwischen 0,6 mV / °C und 1,8 mV / °C, insbesondere um einen Wert von 1,2 mV ± 0,1 mV / °C.

Als Temperaturschwellenwert wird bevorzugt eine Temperatur im Bereich zwischen 40 °C bis 60 °C, bevorzugt von 45 °C, gewählt. Die Ladespannung unterhalb des Temperaturschwellenwerts liegt vorzugsweise im Bereich zwischen 1,35 V und 1,5 V, vorzugsweise beträgt sie 1,4 V. Die Laderate liegt während des gesamten Ladevorgangs im Bereich zwischen 0,2 C und 10 C. Sie wird bevorzugt während des Ladevorgangs konstant gehalten.

Alternativ kann die Temperaturkompensation der Ladespannung auch kontinuierlich über den Gesamten für die jeweilige Anwendung relevanten Temperaturbereich erfolgen, bevorzugt zwischen +10°C und +70°C. Die Ladeschlussspannung wird in Abhängigkeit von Temperatur, Stromstärke und Elektroden- bzw. Elektrolytzusammensetzung ermittelt.

Weitere Vorteile und Aspekte der Erfindung ergeben sich außer aus den Ansprüchen auch aus der nachfolgenden Beschreibung bevorzugter Ausführungsbeispiele der Erfindung.

### Ausführungsbeispiele

### (1) Herstellung einer ersten Ausführungsform einer Zelle für einen erfindungsgemäßen Zellverbund

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 80 Gew.-% Ni(OH)₂,
- 4 Gew.-% Kobalt-Pulver als Leitmittel
- 14 Gew.-% Nickel-Pulver als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 20 Gew.-% Aktivkohle mit einer BET-Oberfläche > 900 m²/g
- 74,5 Gew.-% Eisenpartikel (zumindest teilweise zu Fe(OH)₂ oxidiert) mit einer mittleren Teilchengröße zwischen 100 und 200 nm sowie
- 5 Gew.-% SBR als Binder
- 0.5 Gew.-% eines weitere wasserlöslichen CMC-Binders/-Verdickers

Die Elektroden wurden jeweils getrocknet und einem Walzvorgang unterworfen. Danach wiesen sie eine Dicke von ca. 250 µm auf. Anschließend wurden mit einem Separator aus Polypropylen (non-woven, Dicke 80 µm) zu einem Elektrodensatz verbaut, wie er in der EP 1 011 163 B1 beschrieben ist, mit einem wässrigen Elektrolyten getränkt (6M KOH-Lösung) und in einem Gehäuse aus vernickeltem Edelstahl verbaut.

### (2) Herstellung einer zweiten Ausführungsform einer Zelle für einen erfindungsgemäßen Zellverbund

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 60 Gew.-% Ni(OH)₂,
- 32 Gew.-% Aktivkohle
- 3 Gew.-% Ruß als Leitmittel
- 3 Gew.-% Ca(OH)2 als Additiv
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 87,0 Gew.-% Aktivkohle mit einer BET-Oberfläche > 900 m²/g
- 10 Gew.-% Eisenpartikel (zumindest teilweise zu Fe(OH)₂ oxidiert) mit einer mittleren Teilchengröße zwischen 100 und 200 nm
- 2,5 Gew.-% eines wasserlöslichen SBR-Binders
- 0.5 Gew.-% eines weitere wasserlöslichen CMC-Binders/-Verdickers

Die Elektroden wurden jeweils getrocknet und einem Walzvorgang unterworfen. Danach wiesen sie eine Dicke von ca. 150 µm auf. Anschließend wurden mit einem Separator aus Polypropylen (non-woven, Dicke 80 µm) zu einem Elektrodensatz verbaut, wie er in der EP 1 011 163 B1 beschrieben ist, mit einem wässrigen Elektrolyten getränkt (6M KOH-Lösung) und in einem Gehäuse aus vernickeltem Edelstahl verbaut.

## Patentansprüche

1. Zellverbund aus zwei oder mehr sekundären elektrochemischen Zellen, die in dem Zellverbund parallel zueinander oder in Reihe geschaltet sind und sich jeweils durch die Merkmale
1.1 eine negative Elektrode enthaltend
1.1.1 einen Stromableiter,
1.1.2 ein pulverförmiges kohlenstoffbasiertes Speichermaterial, das die Speicherung von elektrischer Ladung in der Elektrode durch Ausbildung einer elektrischen Doppelschicht (Helmholtz-Doppelschicht) ermöglicht
und
1.1.3 pulverförmiges Eisen in metallischer und/oder oxidierter Form,
1.2 eine positive Elektrode enthaltend
1.2.1 einen Stromableiter sowie
1.2.2 Nickelhydroxid und/oder Nickeloxyhydroxid,
1.3 einen porösen Separator, der die negative und die positive Elektrode voneinander trennt, sowie
1.4 einen wässrigen, alkalischen Elektrolyten, mit dem die Elektroden und der Separator getränkt sind, sowie
1.5 ein gasdicht ausgebildetes Gehäuse, sowie die folgenden zusätzlichen Merkmale
1.6 die negative Elektrode enthält das kohlenstoffbasierte Speichermaterial in einem Anteil von mindestens 5 Gew.-%, und
1.7 das kohlenstoffbasierte Speichermaterial umfasst Graphen und/oder Aktivkohle, und
1.8 Partikel aus dem kohlenstoffbasierten Speichermaterial und dem Eisen liegen in der negativen Elektrode in einer homogenen Verteilung vor,
auszeichnen.

2. Zellverbund nach Anspruch 1, **dadurch gekennzeichnet, dass** der Anteil an dem kohlenstoffbasierten Speichermaterial in der negativen Elektrode zwischen 5 Gew.-% und 100 Gew.-%, bevorzugt zwischen 5 Gew.-% und 25 Gew.-%, insbesondere zwischen 5 Gew.-% und 15 Gew.-%, liegt.

3. Zellverbund nach Anspruch 1 oder Anspruch 2, **dadurch gekennzeichnet, dass** der Anteil an Eisen in der negativen Elektrode zwischen 50 Gew.-% und 95 Gew.-%, bevorzugt zwischen 75 Gew.-% und 95 Gew.-%, insbesondere zwischen 85 Gew.-% und 95 Gew.-%, liegt.

4. Zellverbund nach einem der vorhergehenden Ansprüche, **dadurch gekennzeichnet, dass** die positive Elektrode das Nickelhydroxid und/oder Nickeloxyhydroxid in einem Anteil zwischen zwischen 10 Gew.-% und 100 Gew.-%, bevorzugt zwischen 25 Gew.-% und 100 Gew.-%, insbesondere zwischen 50 Gew.-% und 100 Gew.-%, enthält.

5. Zellverbund nach einem der vorhergehenden Ansprüche, **dadurch gekennzeichnet, dass** die negative und/oder die positive Elektrode mindestens eine der folgenden zusätzlichen Komponenten enthält:
- einen Elektrodenbinder
- ein Leitmittel
- ein sonstiges Additiv

6. Zellverbund nach einem der vorhergehenden Ansprüche, **dadurch gekennzeichnet, dass** der Stromableiter der positiven und/oder der negativen Elektrode eine dreidimensionale Leitmatrix bildet, in die das jeweilige Speichermaterial, im Falle der positiven Elektrode das Nickelhydroxid und/oder das Nickeloxyhydroxid, eingebettet ist.

7. Zellverbund nach einem der vorhergehenden Ansprüche, **dadurch gekennzeichnet, dass** der Stromableiter der positiven und/oder der negativen Elektrode aus einem metallischen oder metallbeschichteten Schaum oder aus einem metallischen oder metallbeschichtetem Vlies gebildet ist.

8. Zellverbund nach einem der vorhergehenden Ansprüche, **dadurch gekennzeichnet, dass** die positive und/oder die negative Elektrode als dünne Schichten ausgebildet sind, insbesondere mit einer Dicke zwischen 50 µm und 500 µm.

9. Zellverbund nach einem der vorhergehenden Ansprüche, **dadurch gekennzeichnet, dass** der wässrige Elektrolyt eine gelöste Hydroxidverbindung in einem Anteil zwischen 0,1 M und 10 M enthält.

10. Zellverbund nach einem der vorhergehenden Ansprüche, **dadurch gekennzeichnet, dass** der wässrige Elektrolyt eine Sulfatverbindung, insbesondere ein Alkali oder Erdalkalisulfat, aufweist, insbesondere in einer Konzentration zwischen 0,001 und 0,1 Gew.%.

11. Zellverbund nach einem der vorhergehenden Ansprüche, **dadurch gekennzeichnet, dass** das gasdicht ausgebildete Gehäuse ein gas- und flüssigkeitsdichtes Gehäuse aus Edelstahl oder aus vernickeltem Stahl oder Edelstahl ist, das die Elektroden, den Separator und den Elektrolyten flüssigkeitsdicht einschließt.

## Claims

1. Cell bundle composed of two or more secondary electrochemical cells which are connected in parallel to one another or in series in the cell bundle and each have the following features:
1.1 a negative electrode comprising
1.1.1 an output conductor
1.1.2 a pulverulent carbon-based storage material that enables the storage of electrical charge in the electrode through formation of an electrical double layer (Helmholtz double layer)
and
1.1.3 pulverulent iron in metallic and/or oxidized form,
1.2 a positive electrode comprising
1.2.1 an output conductor and
1.2.2 nickel hydroxide and/or nickel oxyhydroxide,
1.3 a porous separator that separates the negative and positive electrodes from one another, and
1.4 an aqueous alkaline electrolyte with which the electrodes and the separator are impregnated, and
1.5 a gas-tight housing,
and the following additional features:
1.6 the negative electrode contains the carbon-based storage material in a proportion of at least 5% by weight, and
1.7 the carbon-based storage material comprises graphene and/or activated carbon, and
1.8 particles of the carbon-based storage material and the iron are in a homogeneous distribution in the negative electrode.

2. Cell bundle according to Claim 1, **characterized in that** the proportion of the carbon-based storage material in the negative electrode is between 5% by weight and 100% by weight, preferably between 5% by weight and 25% by weight, especially between 5% by weight and 15% by weight.

3. Cell bundle according to Claim 1 or Claim 2, **characterized in that** the proportion of iron in the negative electrode is between 50% by weight and 95% by weight, preferably between 75% by weight and 95% by weight, especially between 85% by weight of 95% by weight.

4. Cell bundle according to any of the preceding claims, **characterized in that** the positive electrode contains the nickel hydroxide and/or nickel oxyhydroxide in a proportion between 10% by weight and 100% by weight, preferably between 25% by weight and 100% by weight, especially between 50% by weight and 100% by weight.

5. Cell bundle according to any of the preceding claims, **characterized in that** the negative electrode and/or the positive electrode comprises at least one of the following additional components:
- an electrode binder
- a conducting agent
- another additive.

6. Cell bundle according to any of the preceding claims, **characterized in that** the output conductor of the positive electrode and/or the negative electrode forms a three-dimensional cell matrix into which the respective storage material, in the case of the positive electrode the nickel hydroxide and/or the nickel oxyhydroxide, is embedded.

7. Cell bundle according to any of the preceding claims, **characterized in that** the output conductor of the positive electrode and/or the negative electrode is formed from a metallic or metal-coated foam or from a metallic or metal-coated nonwoven.

8. Cell bundle according to any of the preceding claims, **characterized in that** the positive electrode and/or the negative electrode take(s) the form of thin layers, especially having a thickness between 50 µm and 500 µm.

9. Cell bundle according to any of the preceding claims, **characterized in that** the aqueous electrolyte contains a dissolved hydroxide compound in a proportion between 0.1 M and 10 M.

10. Cell bundle according to any of the preceding claims, **characterized in that** the aqueous electrolyte includes a sulfate compound, especially an alkali metal or alkaline earth metal sulfate, especially in a concentration between 0.001% and 0.1% by weight.

11. Cell bundle according to any of the preceding claims, **characterized in that** the gas-tight housing is a gas- and liquid-tight housing made from stainless steel or made from nickel-plated steel or stainless steel which encloses the electrodes, the separator and the electrolytes in a liquid-tight manner.

## Revendications

1. Ensemble de cellules constitué par deux cellules électrochimiques secondaires ou plus, qui sont commutées en parallèle ou en série les unes par rapport aux autres dans l'ensemble de cellules et qui se caractérisent à chaque fois par les caractéristiques suivantes
1.1 une électrode négative contenant
1.1.1 un collecteur de courant,
1.1.2 un matériau accumulateur sous forme de poudre, à base de carbone, qui permet l'accumulation d'une charge électrique dans l'électrode par la formation d'une double couche électrique (double couche de Helmholtz) et
1.1.3 du fer sous forme de poudre, sous forme métallique et/ou oxydée,
1.2 une électrode positive contenant
1.2.1 un collecteur de courant ainsi que
1.2.2 de l'hydroxyde de nickel et/ou de l'oxyhydroxyde de nickel,
1.3 un séparateur poreux, qui sépare l'électrode négative et l'électrode positive l'une de l'autre ainsi que
1.4 un électrolyte aqueux, alcalin, qui imprègne les électrodes et le séparateur, ainsi que
1.5 une enceinte réalisée de manière étanche aux gaz ainsi que les caractéristiques supplémentaires suivantes
1.6 l'électrode négative contient le matériau accumulateur à base de carbone en une proportion d'au moins 5% en poids et
1.7 le matériau accumulateur à base de carbone comprend du graphène et/ou du charbon actif et
1.8 les particules de matériau accumulateur à base de carbone et de fer se trouvent en une répartition homogène dans l'électrode négative.

2. Ensemble de cellules selon la revendication 1, **caractérisé en ce que** la proportion de matériau accumulateur à base de carbone dans l'électrode négative se situe entre 5% en poids et 100% en poids, de préférence entre 5% en poids et 25% en poids, en particulier entre 5% en poids et 15% en poids.

3. Ensemble de cellules selon la revendication 1 ou la revendication 2, **caractérisé en ce que** la proportion de fer dans l'électrode négative se situe entre 50% en poids et 95% en poids, de préférence entre 75% en poids et 95% en poids, en particulier entre 85% en poids et 95% en poids.

4. Ensemble de cellules selon l'une quelconque des revendications précédentes, **caractérisé en ce que** l'électrode positive contient l'hydroxyde de nickel et/ou l'oxyhydroxyde de nickel en une proportion entre 10% en poids et 100% en poids, de préférence entre 25% en poids et 100% en poids, en particulier entre 50% en poids et 100% en poids.

5. Ensemble de cellules selon l'une quelconque des revendications précédentes, **caractérisé en ce que** l'électrode négative et/ou l'électrode positive contient au moins l'un des composants supplémentaires suivants :
- un liant d'électrode
- un conducteur
- un autre additif.

6. Ensemble de cellules selon l'une quelconque des revendications précédentes, **caractérisé en ce que** le collecteur de courant de l'électrode positive et/ou de l'électrode négative forme une matrice conductrice tridimensionnelle dans laquelle le matériau accumulateur respectif, dans le cas de l'électrode positive l'hydroxyde de nickel et/ou l'oxyhydroxyde de nickel, est incorporé.

7. Ensemble de cellules selon l'une quelconque des revendications précédentes, **caractérisé en ce que** le collecteur de courant de l'électrode positive et/ou de l'électrode négative est formé à partir d'une mousse métallique ou revêtue de métal ou d'un non-tissé métallique ou revêtu de métal.

8. Ensemble de cellules selon l'une quelconque des revendications précédentes, **caractérisé en ce que** l'électrode positive et/ou l'électrode négative est/sont conçue(s) sous forme de couches minces, présentant en particulier une épaisseur entre 50 µm et 500 µm.

9. Ensemble de cellules selon l'une quelconque des revendications précédentes, **caractérisé en ce que** l'électrolyte aqueux contient un composé de type hydroxyde dissous en une proportion entre 0,1 M et 10 M.

10. Ensemble de cellules selon l'une quelconque des revendications précédentes, **caractérisé en ce que** l'électrolyte aqueux présente un composé de type sulfate, en particulier un sulfate de métal alcalin ou de métal alcalino-terreux, en particulier en une concentration entre 0,001 et 0,1% en poids.

11. Ensemble de cellules selon l'une quelconque des revendications précédentes, **caractérisé en ce que** l'enceinte conçue de manière étanche aux gaz est une enceinte étanche aux gaz et aux liquides en acier inoxydable ou en acier nickelé ou en acier inoxydable nickelé, qui renferme les électrodes, le séparateur et les électrolytes de manière étanche aux liquides.
